# EUROPÄISCHE PATENTANMELDUNG

(11) **EP 1 209 868 A2**
(43) Veröffentlichungstag der Anmeldung: **29.05.2002**
(21) Anmeldenummer: 01127705.0
(22) Anmeldetag: 21.11.2001
(51) Int. Cl.: H04L 25/38, H04L 5/04

(54) **Verfahren zur gleichzeitigen unidirektionalen Übertragung von Daten mit zwei verschiedenen Übertragungsraten, insbesondere über die Stromzufuhr eines Schienenfahrzeuges**

(30) Priorität: 27.11.2000 DE 10058766
(71) Anmelder: Trend Network AG, 40210 Düsseldorf (DE)
(72) Erfinder: Möller, Michaeal, 40625 Düsseldorf (DE); Schäffer, Christian, 86343 Königsbrunn (DE)
(74) Vertreter: Cohausz & Florack

(57) **Zusammenfassung**

Die Erfindung betrifft ein Verfahren zu unidirektionalen Datenübertragung: insbesondere über die Stromzufuhr eines Schienenfahrzeugs, bei dem das technische Problem, eine zuverlässigere Synchronisation und/oder eine geeignete Anpassung der Übertragungsraten für unterschiedliche Betriebsbedingungen zu verwirklichen, gelöst wird durch das Übertragen einer Synchronisationsbitfolge zum Synchronisieren der Empfangseinrichtung auf das übertragene Empfangssignal. Das technische Problem wird auch dadurch gelöst, daß eine Datenbitfolge übertragen wird, die zwei unterschiedliche Übertragungsraten aufweist.

## Beschreibung

Die Erfindung betrifft ein Verfahren zur unidirektionalen Datenübertragung, das insbesondere bei der Datenübertragung auf ein Fahrzeug, beispielsweise auf ein Schienenfahrzeug, über die Stromzuführung durchgeführt wird.

Diese Datenübertragung zeichnet sich zum einen dadurch aus, daß auf die Versorgungsspannung, die vom Fahrzeug zum Antrieb benötigt wird, eine Datenbitfolge als binäres Spannungssignal aufmoduliert wird. Im Gegensatz zu sonstigen Datenübertragungen, beispielsweise mittels Funkwellen, bei denen durch ein asynchrones Abtasten des analog übertragenen Signals die übertragenen Informationen abgeleitet werden, kann bei der Übertragung eines binären Spannungssignal die übertragenen digitalen Informationen nicht allein durch asynchrones Abtasten der Empfangssignals dekodiert werden.

Zum anderen besteht eine Besonderheit darin, daß kein Rückkanal vorhanden ist, über den eine Synchronisation zwischen Sende- und Empfangseinrichtung erfolgen kann. Ein solcher Rückkanal ist auch als Handshake bekannt.

Eine weitere Besonderheit bei der unidirektionalen Datenübertragung mittels der Stromzuführung auf ein Fahrzeug besteht darin, daß der Kontakt des Stromabnehmers mit der Stromzufuhrleitung nicht eine gleichbleibend gute Datenübertragung ermöglicht. Dieses gilt insbesondere während der Fahrt, bei der sich der Stromabnehmer aufgrund der Geschwindigkeit des Fahrzeuges kurzzeitig vom Stromabnehmer lösen kann, so daß die Stromzufuhr und somit auch die Datenübertragung unterbrochen wird. Darüber hinaus treten durch Funkenüberschlag starke Störungen in Form von hohen Spannungssignalen auf, die ebenfalls die Datenübertragung zeitweise unmöglich machen. Dagegen ist eine nahezu ungestörte Datenübertragung während des Stillstandes des Fahrzeuges möglich. Daher muß im Stand der Technik ein Kompromiss in der Übertragungsrate angestellt werden, um sowohl während der Fahrt als auch während des Stillstandes des Fahrzeuges eine geeignete Datenübertragung über die Stromzufuhr zu gewährleisten.

Zuvor ist die unidirektionale Datenübertragung anhand des Beispieles der Datenübertragung mittels der Stromzuführung auf ein Fahrzeug beschrieben worden. Dieses gilt jedoch nicht als Einschränkung für die vorliegende Erfindung, denn jegliche unidirektionale Datenübertragung, bei der eine digitale Datenbitfolge übertragen wird, kann Ausgangspunkt für die Anwendung der vorliegenden Erfindung sein.

Der vorliegenden Erfindung liegt nun das technische Problem zugrunde, die unidirektionale Datenübertragung dahingehend weiterzuentwickeln und auszugestalten, daß eine zuverlässigere Synchronisation und/oder eine geeignete Anpassung der Übertragungsraten für unterschiedliche Betriebsbedingungen verwirklicht werden.

Gemäß einer ersten Lehre der vorliegenden Erfindung wird das zuvor aufgezeigte technische Problem durch ein Verfahren zur unidirektionalen Datenübertragung mit den Merkmalen des Anspruches 1 gelöst. Von einer Sendeeinrichtung wird in vorgegebenen Zeitabständen eine Synchronisationsbitfolge ausgesendet, wobei zwischen jeweils zwei Synchronisationsbitfolgen Datenbitfolgen ausgesendet werden, die die zu übertragenden Informationen enthalten. Von einer Empfangseinrichtung wird aus dem Empfangssignal die Synchronisationsbitfolge erkannt und aus der Synchronisationsbitfolge werden die Übertragungsrate und Phase des übertragenen Datensignals abgeleitet. Unter Beibehaltung der so ermittelten und eingerichteten Synchronisation werden die Datenbitfolgen erfaßt und ausgewertet. Erfindungsgemäß ist erkannt worden, daß eine in ihrem konkreten Bitmuster bekannte Synchronisationsbitfolge auf der Empfängerseite erfaßt werden kann, wenn diese aufgrund ihrer charakteristischen Bitmusters ansonsten nicht im Datenbitstrom enthalten ist. In bevorzugter Weise wird dazu eine alternierende Reihenfolge von Eins-Bits und Null-Bits als Synchronisationsbitfolge übertragen.

Dieses Bitmuster ist in besonderer Weise dazu geeignet, den Zeittakt der Übertragungsrate auf der Empfängerseite zu erkennen. Dazu wird das empfangene digitale Datensignal auf der Empfangsseite mit einer hohen Repititionsrate abgetastet, so daß die Spannungswerte des Eins-Bits und des Null-Bits erkannt und voneinander unterschieden werden können. Weist die Synchronisationsbitfolge eine genügende Länge auf, so kann mit hinreichender Genauigkeit sowohl die Übertragungsrate als auch die Phase des übertragenden Datensignals abgeleitet werden.

In weiter bevorzugter Weise werden mit der zwischen jeweils zwei Synchronisationsbitfolgen übertragenen Datenbitfolge zunächst ein Startcode und anschließend die Informationsbitfolge übertragen. Dadurch wird sichergestellt, daß auf der Empfängerseite nach erfolgter Synchronisation die Informationen der Datenbitfolge nicht nur erkannt, sondern auch richtig ausgewertet werden können. Somit ist es möglich, bei der unidirektionalen Datenübertragung zu einem beliebigen Zeitpunkt die Synchronisation durchzuführen und Informationen aus den Datenbitfolgen abzuleiten.

In weiter bevorzugter Weise wird am Ende der Datenbitfolge ein Stopcode übertragen, bevor erneut eine Synchronisationsbitfolge übertragen wird. Somit wird auf der Empfangsseite der Beginn einer erneuten Übertragung der Synchronisationsbitfolge vorbereitet, so daß das Auswerte und Synchronisationsverfahren entsprechend eingestellt wird.

Gemäß einer zweiten Lehre der vorliegenden Erfindung wird das oben aufgezeigte technische Problem durch ein Verfahren zur unidirektionalen Datenübertragung mit den Merkmalen des Anspruches 5 gelöst. Dazu wird eine Hauptdatenbitfolge mit einer vorgegebenen ersten Übertragungsrate übertragen. Jedes Eins-Bit der Hauptdatenbitfolge wird weiterhin in eine Unterdatenbitfolge mit einer zweiten Übertragungsrate unterteilt, wobei die zweite Übertragungsrate ein Mehrfaches der ersten Übertragungsrate ist. Mit anderen Worten entspricht die zweite Übertragungsrate dem n-fachen der ersten Übertragungsrate, wobei n eine ganze Zahl größer als 3 ist. Weiterhin wird der Unterdatenbitfolge ein Startcode und ein Stopcode jeweils in Form eines Eins-Bits hinzugefügt, wobei zwischen dem Stardcode und dem Stopcode der Unterdatenbitfolge eine Unterinformationsbitfolge übertragen wird. Durch das Vorsehen von Startcode und Stopcode in Form eines Eins-Bits wird sichergestellt, daß das der Unterdatenbitfolge zugrunde liegenden Eins-Bit der Hauptdatenbitfolge unabhängig vom Bitmuster der Unterinformationsbitfolge am Anfang und am Ende einen Spannungswert einnimmt, der dem Wert der logischen Eins entspricht.

Ein Vorteil des erfindungsgemäßen Verfahrens liegt darin, daß während der unidirektionalen Datenübertragung zwei verschiedenen Datenbitfolgen mit unterschiedlichen Übertragungsraten gleichzeitig übertragen werden können. So kann einerseits die Hauptdatenbitfolge mit geringerer Übertragungsrate ausgewertet werden, wenn die Übertragungsbedingungen aufgrund beispielsweise von Störsignalen eine Auswertung des Empfangssignals mit einer größeren, nämlich der zweiten Übertragungsrate nicht ermöglicht. Sind die Störungen dagegen genügend gering, so kann das Empfangssignal auch oder nur mit der zweiten, höheren Übertragungsrate abgetastet und ausgewertet werden. Dazu ist vorausgesetzt, daß die Abtastrate, mit der auf der Empfangsseite das Empfangssignal abgetastet wird, größer als die zweite Übertragungsrate, insbesondere ein Mehrfaches ist.

Bei einer weiteren Ausgestaltung der Erfindung werden als Startcode der Unterdatenbitfolge ein Eins-Bit gefolgt von einem Null-Bit und als Stopcode ein Null-Bit gefolgt von einem Eins-Bit übertragen. Somit wird nicht nur am Anfang und am Ende jeder Unterdatenbitfolge ein Spannungswert der logischen Eins übertragen, sondern es wird zudem ein charakteristisches Anfangsbitmuster und Endbitmuster mit Hilfe des Startcodes beziehungsweise des Stopcodes übertragen. Diese charakteristischen Bitmuster dienen einem leichteren und zuverlässigeren Erkennen des Beginns und des Endes der Unterdatenbitfolge.

Weiterhin ist es bevorzugt, als Unterinformationsbitfolge ein aus acht Bits bestehendes Byte oder ein ganzzahliges Vielfaches eines Bytes übertragen wird. Da es gängige Praxis ist, Informationen in Einheiten Byte zu übertragen, wird durch die derart ausgestaltete Unterdatenbitfolge sichergestellt, daß pro Eins-Bit der Hauptdatenbitfolge jeweils ein oder mehrere Bytes an Unterinformationen übertragen werden. Dieses dient ebenfalls der Vereinfachung des Ableitens der digitalen Informationen aus der Unterdatenbitfolge, die letztlich unregelmäßig getaktet übertragen wird, da diese abhängig von dem Auftreten von Eins-Bits der Hauptdatenbitfolge ist.

Eine besonders bevorzugte Ausgestaltung der vorliegenden Erfindung besteht darin, zur unidirektionalen Datenübertragung zum einen die Synchronisation mit Hilfe eines Verfahrens gemäß der ersten Lehre der vorliegenden Erfindung durchzuführen, und gemäß der zweiten Lehre der vorliegenden Erfindung eine Hauptdatenbitfolge mit einer ersten Übertragungsrate und eine Unterdatenbitfolge mit einer zweiten, größeren Übertragungsrate zu übertragen. In diesem Fall wird die Synchronisationsbitfolge mit der gleichen Übertragungsrate wie die Hauptdatenbitfolge übertragen, so daß eine Synchronisation auf die erste Übertragungsrate stattfindet. Aus dieser Synchronisation kann dann durch eine entsprechende Multiplikation die zweite Übertragungsrate als Mehrfaches der ersten Übertragung abgeleitet werden.

Bei einer weiteren Ausgestaltung der vorliegenden Erfindung wird das Empfangssignal mit einer Abtastrate ausgewertet, die dem m-fachen der zweiten Übertragungsrate entspricht, wobei m eine ganze Zahl größer 1 ist. In der Hauptdatenbitfolge wird nachfolgend dann ein Eins-Bit festgestellt, wenn zwischen zwei Takten der ersten Übertragungsrate, die sich aus der Synchronisation ergibt, bei mindestens einer Abtastung ein Spannungswert größer als ein vorgegebener Stellenwert, insbesondere innerhalb eines Wertebereiches, ermittelt wird. Mit anderen Worten wird also dann ein Eins-Bit der Hauptdatenbitfolge festgestellt, wenn zwischen dem Zeitpunkt der positiven Flanke des Eins-Bits des Startcodes und der negativen Flanke des Eins-Bits des Stopcodes der Unterdatenbitfolge mindestens einmal der Spannungswert entsprechend der logischen Eins festgestellt wird. Beispielsweise wird bei der bekannten Transistor-Transistor-Logik (TTL) ein Schwellwert von ca. 2,2 bis 2,4 V herangezogen, oberhalb dessen eine logische Eins angenommen wird. Die bevorzugte Verwendung eines Wertebereiches dient dazu, daß Störsignale zu einer erheblichen Überhöhung des Spannungswertes führen können, die nicht mehr dem Spannungswert eine logischen Eins entsprechen. Daher kann beispielsweise bei der TTL-Logik ein Wertebereich von 2,2 bis 5,5 V angesetzt werden. Nur dann, wenn mindestens eine Abtastung einen Spannungswert innerhalb dieses Wertebereiches ergibt, wird ein Eins-Bit der Hauptdatenbitfolge festgestellt.

Zuvor ist die Erfindung allgemein für jegliche Form der unidirektionalen Datenübertragung beschrieben worden. Bei dem bereits angesprochenen Beispiel der Datenübertragung über die Stromzufuhr auf ein Fahrzeug, wie es insbesondere bei Schienenfahrzeugen, also Straßenbahnen und Zügen der Fall ist, können die bisher beschriebenen erfindungsgemäßen Verfahren in besonders vorteilhafter Weise eingesetzt werden. Denn zum einen kann durch das Übertragen einer Synchronisationsbitfolge die im Fahrzeug über die Stromzufuhr übertragene und dort demodulierte Datenbitfolge erst nach einer erfolgten Synchronisation ausgewertet werden. Die Gründe liegen darin, daß kein Rückkanal für einen Synchronisationsabgleich existiert und daß die Daten als binäres Spannungssignal aufmoduliert sind, die ein asynchrones Abtasten unter den bei Fahrzeugen mit Stromabnehmern gegebenen Bedingungen ausschließen. Zum anderen kann in vorteilhafter Weise das Verfahren zum Übertragen von Datenbitfolgen mit unterschiedlichen Übertragungsraten bei Fahrzeugen mit Stromabnehmern eingesetzt werden, da abhängig vom Fahrtzustand des Fahrzeuges erheblich unterschiedlichen Empfangssignalqualitäten vorliegen. Steht das Fahrzeug still oder fährt es nur langsam, so kann eine nahezu ungestörte Übertragung der auf die Versorgungsspannung aufmodulierten Datenbitfolge erfolgen, da ein fester Kontakt des Stromabnehmers mit der Stromzufuhrleitung besteht. In einem solchen Fall kann die mit der zweiten Übertragungsrate übertragene Unterdatenbitfolge problemlos ausgewertet werden. Fährt dagegen das Fahrzeug mit größerer Geschwindigkeit, so treten aufgrund kurzzeitiger Unterbrechungen der Stromzufuhr durch ein Ablösen des Stromabnehmers von der Stromzufuhrleitung sowie auch durch Funkenüberschläge und andere Störeinflüsse Unregelmäßigkeiten und Störsignale im übertragenen Empfangssignal auf. Diese erschweren oder machen eine Auswertung der Unterdatenbitfolge unmöglich, so daß in diesem Zustand nur die Hauptdatenbitfolge mit geringerer Übertragungsrate, aber größerer Zuverlässigkeit ausgewertet wird, um die übertragene Informationen abzuleiten.

Dabei kann in bevorzugter Weise ein Grenzwert der Störsignalhäufigkeit festgelegt werden, um ein Maß für die Durchführung der Auswertung nur der Hauptdatenbitfolge oder auch der Unterdatenbitfolge zu erhalten. Dabei kann die Störsignalhäufigkeit als Funktion der Geschwindigkeit des Fahrzeuges angenommen werden, da die Anzahl der Störsignale mit zunehmender Geschwindigkeit erheblich ansteigt. Somit kann auch die Unterscheidung zwischen Stillstand und Fahrt getroffen werden. Daneben kann auch eine geringe Geschwindigkeit noch für eine Auswertung der Unterdatenbitfolge geeignet sein, so daß der Grenzwert bei einer niedrigen oder mittleren Geschwindigkeit gesetzt wird.

Daneben kann die Störsignalhäufigkeit auch während der Auswertung der übertragenen Datenbitfolge festgestellt werden, um ein automatisches Umschalten zwischen der Auswertung der Hauptdatenbitfolge und der Unterdatenbitfolge zu realisieren.

Im folgenden wird die Erfindung anhand von Beispielen von Datenbitfolgen näher erläutert, wozu auf die beigefügte Zeichnung bezug genommen wird. In der Zeichnung zeigen
- Fig. 1: einen Ausschnitt aus der übertragenen Gesamtdatenbitfolge mit einer Darstellung des Spannungsverlaufes der Synchronisationsbitfolge,
- Fig. 2: ein erstes Ausführungsbeispiel einer Hauptdatenbitfolge sowie zweier Unterdatenbitfolgen A und B und
- Fig. 3: ein zweites Ausführungsbeispiel einer Hauptdatenbitfolge sowie zweiter Unterdatenbitfolgen C und D.

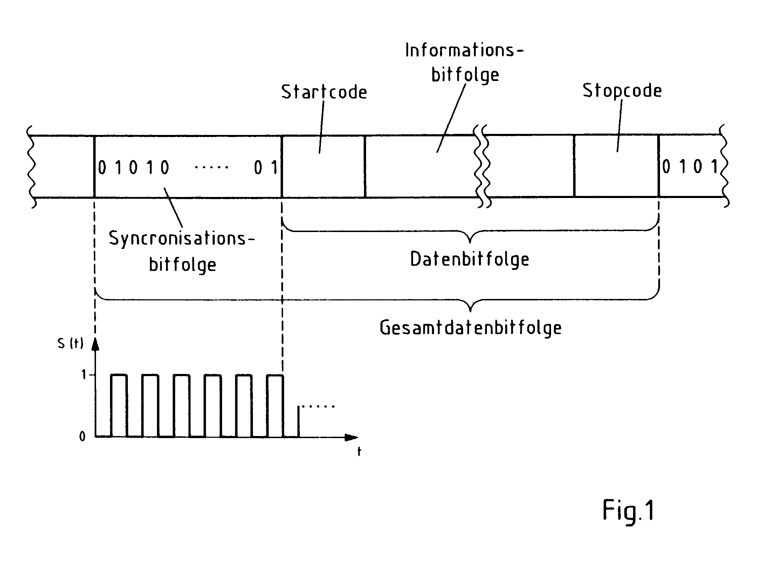

Fig. 1 zeigt eine Gesamtdatenbitfolge, die bei der Durchführung des Verfahrens gemäß der ersten Lehre der vorliegenden Erfindung, also zur synchronisierten unidirektionalen Datenübertragung eingesetzt werden kann. Die im nachfolgenden detailliert zu beschreibenden Gesamtdatenbitfolge tritt wiederkehrend im in Fig. 1 oben ausschnittsweise dargestellten gesamten Datenbitstrom auf, wobei die Datenbitfolgen verschiedener Gesamtdatenbitfolgen unterschiedlich sind und von der zu übertragenden Information abhängig sind.

Zu Beginn der Gesamtdatenbitfolge wird erfindungsgemäß eine Synchronisationsbitfolge übertragen, die vorliegend aus einer alternierenden Abfolge von Null-Bits und Eins-Bits besteht. Dieses ist anschaulich im unteren Teil der Fig. 1 durch die Darstellung des Spannungsverlaufes S(t) zwischen den Spannungswerten der logischen Eins und der logischen Null dargestellt. Die zeitliche Abfolge des Spannungssignals S(t) stellt ein regelmäßiges Muster dar, das auf der Seite der Empfangseinrichtung erkannt wird und aus der die Übertragungsrate und Phase des übertragenen Datensignals, also der Gesamtdatenbitfolge abgeleitet werden. Da die Synchronisationsbitfolge ein Bitmuster repräsentiert, das in dieser Form ansonsten nicht in der Gesamtdatenbitfolge auftritt, kann das erkannte Bitmuster als Synchronisationsbitfolge interpretiert und für eine Synchronisation der weiteren Abtastung des Empfangssignals verwendet werden.

Unter Beibehaltung der so eingerichteten Synchronisation wird dann die Datenbitfolge erfaßt und ausgewertet, die im in Fig. 1 dargestellten Ausführungsbeispiel einen Startcode, eine Informationsbitfolge und einen Stopcode aufweist. Dabei sind insbesondere im Startcode Adressierungs- und Identifizierungsinformationen enthalten, die die in der Informationsbitfolge enthaltene Information eindeutig kennzeichnen.

Nach dem Stopcode der Datenbitfolge tritt erneut die charakteristische Synchronisationsbitfolge im Datenbitstrom auf, so daß vor einer Auswertung der Datenbitfolge einer nächsten Gesamtdatenbitfolge eine erneute Synchronisation stattfindet. Auch wenn die Synchronisation nicht in jedem Fall erforderlich ist, ermöglicht die regelmäßig wiederkehrende Übertragung der Synchronisationsbitfolge, daß zu einem beliebigen Zeitpunkt mit der Auswertung des Empfangssignals begonnen werden kann, wobei zunächst eine Synchronisationsbitfolge erkannt werden muß, um die Abtastung des Empfangssignals zu synchronisieren.

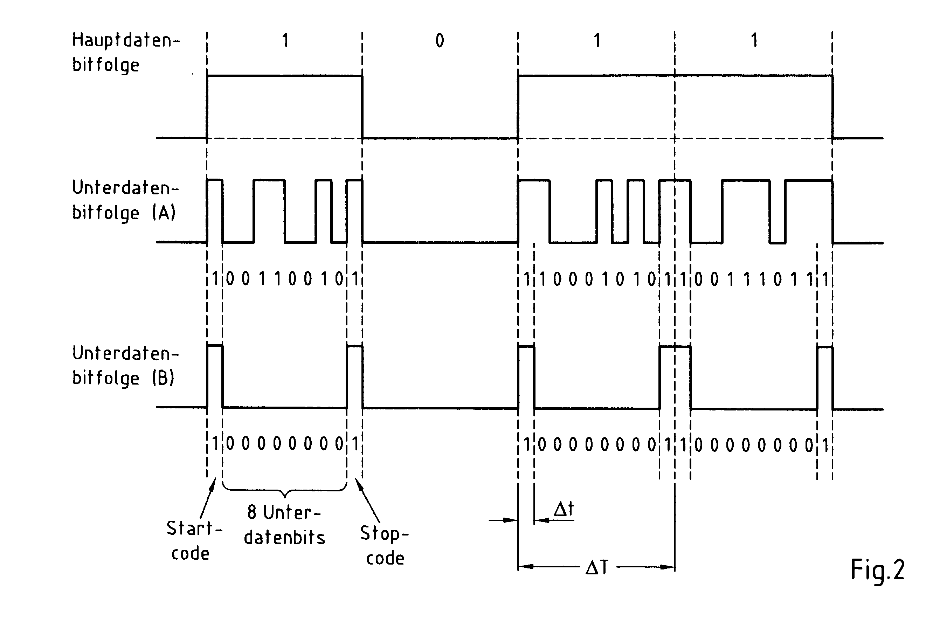

Fig. 2 zeigt ein erstes Ausführungsbeispiel einer Datenbitfolge, die bei der Durchführung eines Verfahrens gemäß der zweiten Lehre der vorliegenden Erfindung übertragen wird.

In Fig. 2 oben wird eine Hauptdatenbitfolge 1011 dargestellt, wobei die horizontale Achse als Zeitachse gewählt worden ist. Die eingezeichnete Zeitspanne ΔT stellt dabei eine Periode der ersten Übertragungsrate dar.

Die mittlere in Fig. 2 dargestellte Kurve stellt ein erstes Beispiel eines übertragenen Gesamtsignals mit einer Unterdatenbitfolge A dar. Jedes Eins-Bit der Hauptdatenbitfolge ist in eine Unterdatenbitfolge mit einer zweiten Übertragungsrate unterteilt, die in Fig. 2 mit der Periode Δt gekennzeichnet ist. Im vorliegenden Ausführungsbeispiel entspricht die zweite Übertragungsrate dem 10-fachen der ersten Übertragungsrate. Weiterhin ist in der Unterdatenbitfolge jedes Eins-Bits der Hauptdatenbitfolge das erste und letzte Bit ein Eins-Bit, wodurch ein Startcode und ein Stopcode der Unterdatenbitfolge realisiert wird. Zwischen dem Startcode und dem Stopcode der Unterdatenbitfolge ist dann die Unterinformationsbitfolge 00110010 enthalten. Diese besteht vorliegend also aus 8 Unterdatenbits, also einem Byte an Informationen. Das bedeutet, daß insgesamt 10 Datenbits mit der zweiten Übertragungsrate während einer Periode ΔT der ersten Übertragungsrate der Hauptdatenbitfolge im Datenbitstrom enthalten sind.

Zur Verdeutlichung des Startbits und Stopbits ist in Fig. 2 unten ein Gesamtsignal mit einer Unterdatenbitfolge B dargestellt, die als Unterinformationsbitfolge ausschließlich Null-Bits aufweist. Somit werden die charakteristischen Start- und Stopbits, die jeweils den Wert Eins annehmen, im Gesamtsignal deutlich.

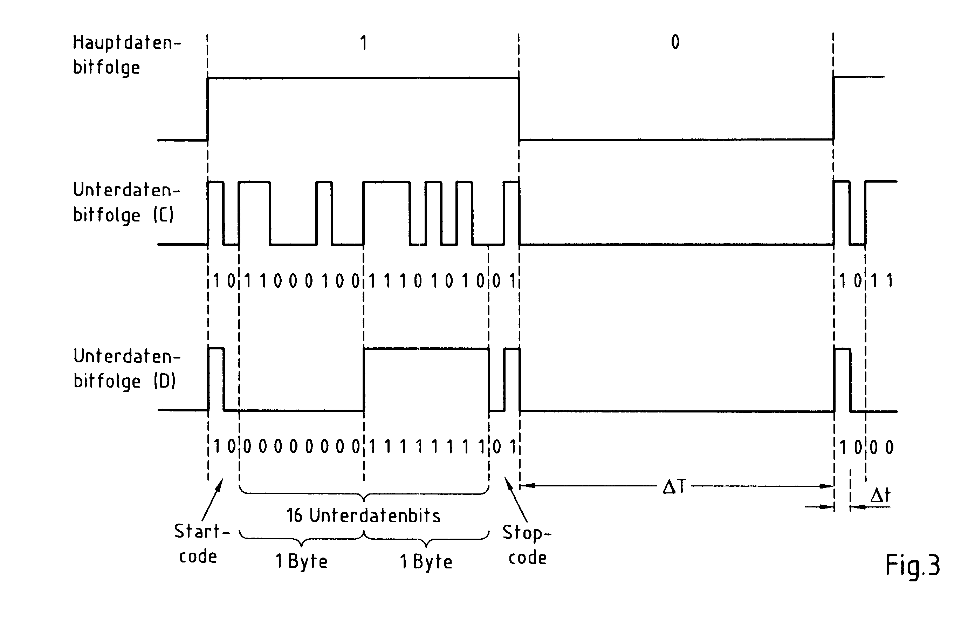

Fig. 3 zeigt ein weiteres Ausführungsbeispiel einer Datenbitfolge, bei der jedes Eins-Bit der Hauptdatenbitfolge in eine Unterdatentbitfolge unterteilt wird, die von der in Fig. 2 dargestellten abweicht.

Als Startcode der Unterdatenbitfolge wird ein Eins-Bit gefolgt von einem Null-Bit und als Stopcode ein Null-Bit gefolgt von einem Eins-Bit übertragen. Somit ergibt sich am Anfang und am Ende der Unterdatenbitfolge C ein charakteristisches Bitmuster bestehend aus jeweils 2 Bits.

Zwischen dem Startcode und dem Stopcode sind 16 Unterinformationsbits, also 2 Bytes an Informationen angeordnet vorliegend als 11000100 und 11101010. Daraus ergibt sich insgesamt, daß 20 Bits einer Unterdatenbitfolge während der Zeitdauer eines Eins-Bits der Hauptdatenbitfolge übertragen werden. Dementsprechend entspricht die zweite Übertragungsrate, die durch die Periode Δt in Fig. 3 gekennzeichnet ist, dem 20-fachen der ersten Übertragungsrate der Hauptdatenbitfolge, die durch die Periode ΔT in Fig. 3 gekennzeichnet ist.

Die in Fig. 3 unten dargestellte Unterdatenbitfolge D verdeutlicht noch einmal das Bitmuster insbesondere zu Beginn und am Ende der Unterinformationsbitfolge eines Eins-Bits einer Hauptdatenbitfolge. Als Unterdatenbitfolge ist dabei ein erstes Byte mit ausschließlich Null-Bits und ein zweites Byte mit ausschließlich Eins-Bits gewählt worden.

Bei den Figuren 2 und 3 ist zu beachten, daß die obere Kurve schematisch die Hauptdatenbitfolge darstellt, während die jeweils darunter dargestellten Spannungsverläufe das übertragene Empfangssignal einschließlich der Unterdatenbitfolge darstellen. Diese Darstellung ist jedoch idealisiert, da keinerlei Störsignale eingetragen sind.

Das Abtasten des Empfangssignals kann unabhängig von einer Synchronisation mit einer Abtastrate durchgeführt werden, die mindestens dem 2-fachen der zweiten Übertragungsrate entspricht. Damit wird sichergestellt, daß bei Vorliegen eines Eins-Bits einer Unterdatenbitfolge mindestens ein ausgewerteter Spannungswert dem Spannungswert der logischen Eins entspricht. Das gleiche gilt für die Null-Bits der Unterdatenbitfolge, wobei mindestens ein Spannungswert ermittelt wird, der dem Spannungswert der logischen Null entspricht. Ist die Abtastrate größer als das 2-fache der zweiten Übertragungsrate, so werden pro Bit der Unterdatenbitfolge mindestens zwei Abtastwerte erzeugt werden, die aufgrund der Zeitpunkte der Abtastung geeignet sind, um den Spannungswert des entsprechenden Bits zu bestimmen.

Liegt nun das Empfangssignal mit ausreichender Genauigkeit vor, also insbesondere bei geringem Aufkommen an Störsignalen, so kann die Unterdatenbitfolge durch die Abtastung mit der hohen Abtasterate ausgewertet werden. Dabei ist Voraussetzung, daß die erste Übertragungsrate und zweite Übertragungsrate in ihrer Größe bekannt sind. Eine Synchronisation ist für diese Auswertung insbesondere dann nicht erforderlich, wenn ein nahezu störungsfreies Signal vorliegt.

Ist dagegen das Empfangssignal gestört, so ist es vorteilhaft, wenn für eine zuverlässige Auswertung des Empfangssignals eine Synchronisation mit der Phase und der ersten Übertragungsrate vorliegt. Diese Synchronisation kann dadurch erfolgen, daß die in Fig. 1 beschriebene Synchronisationsbitfolge mit der ersten Übertragungsrate übertragen wird, wobei die Eins-Bits der Synchronisationsbitfolge durchgängig einen Spannungswert entsprechend der logischen Eins aufweisen, also nicht durch eine Unterdatenbitfolge unterteilt sind.

Für eine Auswertung der Hauptdatenbitfolge reicht es dann aus, wenn zwischen zwei Takten der ersten Übertragungsrate, also zwischen jeweils dem Startzeitpunkt zweier Hauptdatenbits bei mindestens einer Abtastung ein Spannungswert größer als ein vorgegebener Schwellenwert oder innerhalb eines Wertebereiches ermittelt wird. Damit kann selbst bei großer Störungsrate dann die Hauptdatenbitfolge ausgewertet werden, wenn nur ein Abtastwert innerhalb der Zeitdauer eines Eins-Bits ein Abtastwert gleich dem Spannungswert der logischen Eins entspricht. Auch wenn die Unterdatenbitfolge dann nicht mehr auswertbar ist, so kann doch zumindest die Hauptdatenbitfolge und deren Informationsinhalt ausgewertet werden.

## Patentansprüche

1. Verfahren zur unidirektionalen Datenübertragung,
- bei dem von einer Sendeeinrichtung in vorgegebenen Zeitabständen eine Synchronisationsbitfolge ausgesendet wird,
- bei dem zwischen den Synchronisationsbitfolgen Datenbitfolgen ausgesendet werden, die die zu übertragenden Informationen enthalten,
- bei dem von einer Empfangseinrichtung aus dem Empfangssignal die Synchronisationsbitfolge erkannt wird und aus der Synchronisationsbitfolge die Übertragungsrate und Phase des übertragenen Datensignals abgeleitet werden und
- bei dem unter Beibehaltung der so eingerichteten Synchronisation die Datenbitfolgen erfaßt und ausgewertet werden.

2. Verfahren nach Anspruch 1,
bei dem als Synchronisationsbitfolge über eine vorgegebene Zeitdauer eine alternierende Reihenfolge von Eins-Bits und Null-Bits übertragen wird.

3. Verfahren nach Anspruch 1 oder 2,
bei dem mit der Datenbitfolge zunächst ein Startcode und anschließend die Informationsbitfolge übertragen werden.

4. Verfahren nach einem der Ansprüche 1 bis 3,
bei dem am Ende der Datenbitfolge ein Stopcode übertragen wird, bevor erneut eine Synchronisationsbitfolge übertragen wird.

5. Verfahren zur unidirektionalen Datenübertragung,
- bei dem eine Hauptdatenbitfolge mit einer vorgegebenen ersten Übertragungsrate übertragen wird,
- bei dem jedes Eins-Bit der Hauptdatenbitfolge in eine Unterdatenbitfolge mit einer zweiten Übertragungsrate unterteilt wird, wobei die zweite Übertragungsrate ein n-faches, mit ganzzahligem n > 3, der ersten Übertragungsrate ist,
- bei dem als Startcode und als Stopcode der Unterdatenbitfolge jeweils ein Eins-Bit übertragen wird und
- bei dem zwischen Startcode und Stopcode der Unterdatenbitfolge eine Unterinformationsbitfolge übertragen wird.

6. Verfahren nach Anspruch 5,
bei dem als Startcode der Unterdatenbitfolge ein Eins-Bit gefolgt von einem Null-Bit und als Stopcode der Unterdatenbitfolge ein Null-Bit gefolgt von einem Eins-Bit übertragen werden.

7. Verfahren nach Anspruch 5 oder 6,
bei dem als Unterinformaitionsbitfolge ein aus acht Bits bestehendes Byte oder ein ganzzahliges Vielfaches eines Bytes übertragen wird.

8. Verfahren nach einem der Ansprüche 5 bis 7,
bei dem zur synchronisierten Datenübertragung ein Verfahren nach einem der Ansprüche 1 bis 4 durchgeführt wird, wobei die Synchronisationsbitfolge mit der gleicher Übertragungsrate wie die Hauptdatenbitfolge übertragen wird.

9. Verfahren nach Anspruch 8,
- bei dem das Empfangssignal mit einer Abtastrate ausgewertet wird, die einem m-fachen, mit ganzzahligem m>1, der zweiten Übertragungsrate entspricht, und
- bei dem in der Hauptdatenbitfolge ein Eins-Bit festgestellt wird, wenn zwischen zwei Takten der ersten Übertragungsrate bei mindestens einer Abtastung ein Spannungswert größer als ein vorgegebener Schwellenwert, insbesondere innerhalb eines Wertebereiches, ermittelt wird.

10. Verfahren zum Übertragen von Datensignalen auf ein Fahrzeug, insbesondere Schienenfahrzeug, über die Stromzufuhr,
- bei dem das Datensignal auf die Versorgungsspannung aufmoduliert wird,
- bei dem das Datensignal im Fahrzeug aus der abgegriffenen Versorgungsspannung demoduliert wird und
- bei dem die Synchronistion des Datenempfangs mit Hilfe eines Verfahrens nach einem der Ansprüche 1 bis 4 durchgeführt wird.

11. Verfahren nach Anspruch 10,
bei dem zum gleichzeitigen Übertragen zweier digitaler Datensignale mit unterschiedlicher Datenübertragungsrate ein Verfahren nach einem der Ansprüche 5 bis 9 durchgeführt wird.

12. Verfahren nach Anspruch 11,
bei dem oberhalb eines vorgegebenen Grenzwerts der Störsignalhäufigkeit nur die Hauptdatenbitfolge ausgewertet wird.

13. Verfahren nach Anspruch 11,
bei dem unterhalb eines vorgegebenen Grenzwerts der Störsignalhäufigkeit die Unterdatenbitfolge und ggf. die Hauptdatenbitfolge ausgewertet wird.

14. Verfahren nach Anspruch 12 oder 13,
bei die Störsignalhäufigkeit als Funktion der Geschwindigkeit des Fahrzeuges angenommen wird.
